(19) **Europäisches Patentamt**
**European Patent Office**
**Office européen des brevets**

(11) **EP 4 494 741 A1**

(12) **EUROPEAN PATENT APPLICATION**

(43) Date of publication:
**22.01.2025 Bulletin 2025/04**

(21) Application number: **24187447.8**

(22) Date of filing: **09.07.2024**

(51) International Patent Classification (IPC):
**B01D 53/22** (2006.01)     **B01D 53/30** (2006.01)

(52) Cooperative Patent Classification (CPC):
**B01D 53/226;** B01D 53/30; B01D 2256/245;
B01D 2257/102; B01D 2257/104; B01D 2257/304;
B01D 2257/406; B01D 2257/504; B01D 2257/80;
B01D 2258/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.07.2023  IT 202300014331**

(71) Applicant: **AB Impianti Srl**
**25034 Orzinuovi (BS) (IT)**

(72) Inventors:
• **FERRARI, Marco**
  **25034 ORZINUOVI (IT)**
• **CALZAVACCA, Enrico**
  **25034 ORZINUOVI (IT)**
• **APOSTOLI, Sara**
  **25020 CAPRIANO DEL COLLE (IT)**
• **SPADA, Paolo**
  **25035 OSPITALETTO (IT)**

(74) Representative: **Lavoix**
**62, rue de Bonnel**
**69448 Lyon Cedex 03 (FR)**

(54) **PLANT FOR SEPARATING A GAS MIXTURE CONTAINING A PLURALITY OF GASEOUS COMPONENTS**

(57)    Plant (100) for separating a gas mixture, comprising three membrane-based gas separation stages, of which:
- a first stage (10) for separating a gas mixture stream (102) into a first retentate gas stream (11), enriched in a first component (A), and a first permeate gas stream (12) enriched in a second component (B);
- a second stage (20) which receives the first retentate gas stream and separates it into a final retentate gas stream (21), further enriched in component (A), and a second permeate gas stream (22) recirculated upstream of the first stage (10);

- a third stage (30) which receives the first permeate gas stream and separates it into a final permeate gas stream (32), further enriched in component (B), and a further retentate gas stream (31) recirculated upstream of the first stage (10). The recirculation ratio between the total volumetric flow rate of the gas mixture recirculated upstream of the first stage and the volumetric flow rate of the gas mixture to be separated entering the plant is less than 60%. The first and second stages (10, 20) have a total selectivity of the second component with respect to the first component of less than 30 and 15, respectively.

FIG.1

EP 4 494 741 A1

**Description**

The present invention relates to a plant for separating a gas mixture containing a plurality of gas components, and in particular for separating a gas mixture into at least a first final stream of gas enriched in a first component and a second final stream of gas enriched in a second component of said plurality of components.

In particular, the plant according to the invention is especially suitable to be used with an initial mixture of gas or biogas to extract a first stream enriched in methane or biomethane $CH_4$, and a second stream enriched in carbon dioxide $CO_2$, and which will be described hereinafter with reference to said specific application without limiting in any way the scope of application to other types of gas mixtures for the extraction of streams enriched in gases different from those mentioned above.

As is known, in the energy sector, attention to research, development and sustainable exploitation of energy resources alternative to traditional ones has grown significantly in recent decades, at the same time taking into careful consideration all aspects linked to environmental impact and eco-sustainability.

To this end, various technological innovations have been explored and, among these, technologies have been developed aimed at exploiting masses of gas with natural origins, the so-called biogases, originating for example from fermentation of animal sewage, from vegetal waste or material, from landfills, wastewater treatment, etc.

These technologies are based on the use of special membranes which allow to selectively separate gas mixtures into diverse components and are utilized in plants having one or more separation stages, according to multiple operational configurations which vary depending on the type of initial mixture to be treated and above all on the desired final result.

In fact, the configuration of the plant for a given gas mixture and successive separation into the desired components depends on numerous factors, such as: the desired type of final product to be extracted; the acceptable degree of purity of the desired product and the commercial value of the product itself which influences therefore also the type, number and cost of the membranes to be utilized; the number of stages and the various machinery necessary to implement the plant in its entirety.

In particular, one of the parameters which mostly affects the choice of design is the cost of the membranes and that of any possible compression means associated to the various separation stages and which are necessary to guarantee adequate efficiency of the membranes themselves.

Despite the fact that the solutions which are currently available on the market make it possible to obtain good results, there are still some aspects which could be further improved.

Therefore, an object of the present invention is to provide a solution which makes it possible to comprehensively improve the ratio between the quality, quantity and value of the desired product and the cost to implement, operate and maintain the plants necessary to obtain it.

This object, as well as others which will become more apparent from the following description, is reached by a plant according to that defined in particular in claim 1.

Preferred embodiments of the plant according to the invention are object of the attached dependent claims and which are intended as integral part of the present description.

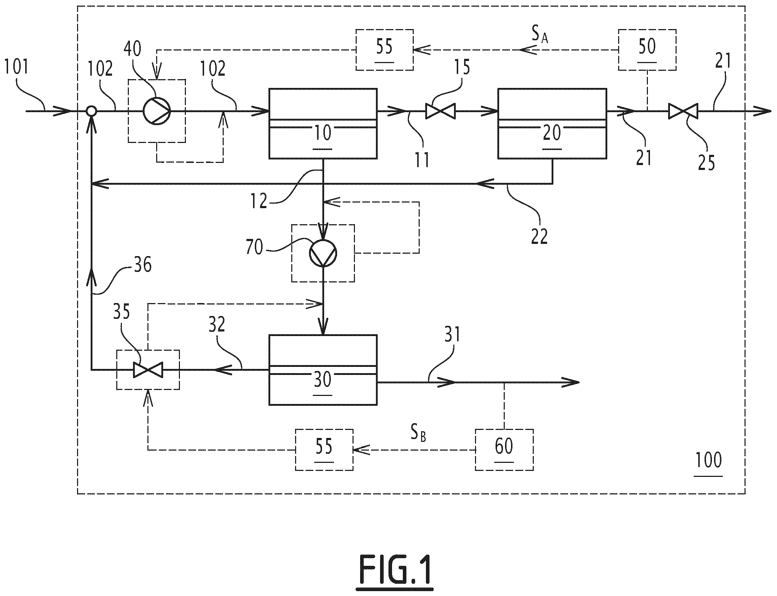

Further characteristics and advantages of the invention will become more apparent from the following detailed description of exemplary and non-limiting embodiments, with reference to Figure 1 which schematically illustrates a block diagram of a preferred embodiment of the plant according to the present invention.

It should be noted that in the following detailed description, the components illustrated in figure 1 are not necessarily to scale and certain characteristics of the description may be shown in a rather schematic form.

Furthermore, when the term "adapted" or "configured" or "shaped" or similar is used in the present context with reference to any component whatsoever in its entirety, or any part of a component whatsoever, said term is intended as comprising correspondingly the structure and/or the configuration and/or the shape and/or the position of the component or part to which it refers.

In particular, when said terms refer to hardware or software electronic means, they are intended as including electronic circuits or parts of circuits, as well as software/firmware, such as algorithms, routines and programs in general, operating and/or resident in any storage medium whatsoever.

Finally, in the following description and claims, the ordinal numbers first, second, etc., are used only for the sake of illustrative clarity and in no way are to be intended as limiting for any purpose whatsoever; in particular, for example the indication "first device..." does not necessarily imply the presence or stringent requirement of a further "second device" or vice-versa, or that the sequence should be exactly that as described with reference to the illustrated embodiments.

Figure 1 schematically illustrates an embodiment of a plant 100 according to the present invention for separating streams of an initial gas mixture 101 received in input by the plant 100 and containing a plurality of gas components.

In particular, the plant 100 is configured to separate the gas mixture 101 into at least one first final gas stream enriched in a first gas component A and a second final gas stream enriched in a second gas component B, forming part of the plurality of components of the mixture 101.

As illustrated, the plant 100 comprises at least:

- a first stage, or first unit, of membrane-based gas separation 10;
- a second stage, or second unit, of membrane-based gas separation 20, located downstream from the first membrane-based gas separation stage 10; and
- a third stage, or third unit, of membrane-based gas separation 30, also located downstream from the first membrane-based gas separation stage 10, on a branch of the plant 100 different from the one where the second membrane-based gas separation stage 20 is located.

For example, according to embodiments already known and/or easily achievable by people skilled in the art, the first, second and third membrane-based gas separation stages each comprise several first membrane modules connected for example in parallel to each other.

Each module comprises for example a casing inside which preferably multiple hollow polymeric fibres are placed; the casing is provided with a gas input port for the introduction of incoming gas streams to the corresponding separation stage, a first gas output port and a second gas output port, to enable the outflow of retentate or permeate gas streams, obtained following interaction between the gas mixture introduced and the membrane or membranes of said stage.

Downstream from one or more of the gas separation stages 10, 20 and 30, one or more gas stream regulating valves can be provided.

In a possible embodiment of the plant 100, at least one regulating valve 35 is provided downstream from the third membrane-based gas separation stage 30.

In the embodiment figure 1, the plant 100 comprises for example a first regulation valve 15 placed downstream from the first membrane-based gas separation stage 10 between this and the second membrane-based gas separation stage 20, a second regulation valve 25 placed downstream from the second membrane-based gas separation stage 20, and a third valve 35 placed downstream from the third membrane-based gas separation stage 30 along a line which connects the third membrane-based gas separation stage 30 to an area upstream of the first membrane-based gas separation stage 10.

Evidently, depending on the applications, one or more of the above-mentioned valves, for example the first valve 15, could be omitted.

In another possible embodiment, the first membrane-based gas separation stage 10 is configured so as to receive in input an initial stream of gas mixture 102 and separate it into a first stream of retentate gas 11, initially enriched in a first component A of said plurality of components, and into a first stream of permeate gas 12, initially enriched in a second component B of said plurality of components.

Usefully, the first membrane-based gas separation stage 10 comprises one or more first membrane modules having a total selectivity of said second component B with respect to said first component A lower than 30.

As illustrated in figure 1, the second membrane-based gas separation stage 20 is placed downstream from the first membrane-based gas separation stage 10, and is configured to receive in input the first stream of retentate gas 11, initially enriched in said first component A, and to separate it again into a final stream of retentate gas 21 further enriched in said first component A, and into a second stream of permeate gas 22, further enriched in said second component B.

The second stream of permeate gas 22, which may still contain a more or less significant percentage of the gas component A and/or the gas component B, is recirculated upstream of the first membrane-based gas separation stage 10 to be treated again in a subsequent separation cycle, combining it with a new stream of gas mixture 101 to be separated introduced in input to the plant 100.

Usefully, the second membrane-based gas separation stage 20 comprises one or more first membrane modules having a total selectivity of said second component B with respect to said first component A lower than 15.

In one possible embodiment, the total selectivity of said second component B with respect to said first component A of the second membrane-based gas separation stage 20 is lower than the total selectivity of said second component B with respect to said first component A of the first membrane-based gas separation stage 10.

The third membrane-based gas separation stage 30 is also placed downstream from the first membrane-based gas separation stage 10, and is configured to receive in input the first stream of permeate gas 12 flowing out of the first stage 10 and to separate it into a final stream of permeate gas 32, further enriched in said second component B, and a further stream of retentate gas 31.

The third membrane-based gas separation stage 30 also comprises one or more first membrane modules having a total selectivity of said component B with respect to said component A which can be chosen according to the applications and, opportunely, can vary between 15 and 90.

The above-mentioned selectivity can be expressed by the following formula (1):

$$Selectivity_{B,A} = \frac{Permeability_B}{Permeability_A} \, (1)$$

Usefully, the further stream of retentate gas 31, which can still contain a more or less significant percentage of the gas component A and/or the gas component B, is also recirculated upstream of the first membrane-based gas separation stage 10, for example along a recirculation line 36 where a third valve 35 is placed, and then treated again in a subsequent separation cycle combining it with a new stream of gas mixture 101 to be separated and entered into the plant 100.

In particular, the plant 100 according to the invention is configured so that the recirculation ratio between the total volumetric flow rate of recirculated gas upstream of the first membrane-based gas separation stage 10 by means of the second stream of permeate gas 22 and the further stream of retentate gas 31, and the volumetric flow rate of the stream of gas mixture to be separated 101 in input to the separation plant 100, is lower than 60%.

In practice, the recirculation ratio, which can be expressed by the following formula (2), where V is the volumetric flow expressed in [Nm$^3$/h],

$$Recirculation\ ratio = \frac{(\dot{V}_{flow102} - \dot{V}_{flow101})}{\dot{V}_{flow101}} \qquad (2)$$

In a preferred embodiment, the plant 100 also comprises a first compressor 40 which is located upstream of the first membrane-based gas separation stage 10 and is configured so as to subject the stream of gas mixture 102 to a compression step prior to being received in input by the first membrane-based gas separation stage 10.

Furthermore, the plant comprises an electronic control unit 55, or controller 55, which is configured to control at least the first compressor 40 and suitably regulate the pressure of said stream of gas mixture 102 in input to the first membrane-based gas separation stage 10.

For example, if the concentration of the second component, e.g. methane CH4, in the retentate of the second stage decreases, then the electronic control unit 55 reacts by increasing the revolutions of the main compressor and consequently the input pressure in the first and second separation stages 10 and 20.

In practice, when the plant 100 is first switched on and starts operating, the initial gas stream 102 in input to the first compressor 40 coincides substantially with the initial gas mixture stream 101 to be separated, in input to the separation plant itself.

Once the plant is operational, such stream of gas mixture 102 is given by the sum of every new gas mixture stream 101 which is introduced into the plant 100 to be separated and by the recirculated streams, i.e. the second permeate gas stream 22 and the further retentate gas stream 31 which are recirculated upstream of the first compressor 40 to then be treated again by the three membrane-based gas separation stages 10, 20 and 30 as previously described.

In a possible embodiment, as schematically illustrated in figure 1, the plant 100 comprises a first device 50 which is placed downstream from the second membrane-based gas separation stage 20 and which is configured to detect at least one parameter indicative of the quantity of said first component A contained in said final retentate gas stream 21.

In particular, the first device 50 detects the concentration of the component A in the final retentate gas stream 21.

Such first device 50 can be constituted by or comprise for example a gas analyzer or gas chromatograph or infrared analyzer which makes it possible to detect the concentration of the first component A contained in the final retentate gas stream 21.

Usefully, in accordance with this embodiment, the control unit 55 is further configured to control at least said first compressor 40 and to regulate the pressure of the gas mixture streams 102 entering the first membrane-based gas separation stage 10 on the basis of one or more signals $S_A$ received in input from the first device 50 indicative of the concentration of said first component A contained in said final retentate gas stream 21.

In this way, for example on the basis of the purity of the first component A, the working pressure of the membranes of the first and second stages 10, 20 is regulated, acting for example on the rotation speed of the first compressor 40.

This control unit, as the external conditions vary, for example variation in the composition of the initial gas mixture streams 101, makes it possible to work at the minimum pressure necessary to maintain the purity required for example by a network utilizing said first component, with consequent optimization of the energy consumption of the plant 100.

In a further embodiment, the plant 100 according to the invention comprises a second device 60 placed downstream from the third membrane-based gas separation stage 30 and is configured to detect at least one parameter indicative of the quantity, and in particular the concentration, of said first component A contained in said final permeate gas stream 32.

Such second device 60 can be composed of or comprise for example a gas analyzer or gas chromatograph or infrared analyzer which makes it possible to detect the concentration of the first component A contained in the final permeate gas stream 32.

Usefully, in accordance with this embodiment, the control unit 55 is further configured to control at least said third valve 35 and to regulate the pressure of the first permeate gas stream 12 before entering the third membrane-based gas separation stage 30 on the basis of one or more signals $S_B$ received in input from the second device 60 indicative of the concentration of the first component A contained in said final permeate gas stream 32.

In this way, it is possible to reduce, substantially under all conditions, emissions into the atmosphere of the first component A so guaranteeing compliance with environmental regulations and consequently increasing the sustainability of the plant 100.

In a possible embodiment, the plant 100 according to the invention comprises a second compressor 70 that is placed between the first membrane-based gas separation stage 10 and the third membrane-based gas separation stage 30.

Conveniently, the second compressor 70 is configured to subject the first permeate gas stream 12 to a compression step before entering the third membrane-based gas separation stage 30.

In accordance with this embodiment, the control unit 55 is further configured to control said second compressor 70 and to regulate the pressure of the first permeate gas stream 12 exiting the first membrane-based gas separation stage 10.

In particular, the control unit 55 is configured to regulate the compression ratio between the pressure of the first permeate gas stream 12 exiting the first membrane-based gas separation stage 10 and the pressure of said permeate gas stream 12 entering the third membrane-based gas separation stage 30 in a range comprised between 1 to 5.

In this case, the pressure of the permeate gas stream 12 exiting the first stage 10 is regulated acting, for example, on the rotation speed of the second compressor 70 which will be controlled therefore on its suction pressure.

In this way, the pressure of the permeate gas stream 12 exiting the first stage 10 is substantially unconnected to the pressure of the same permeate gas stream 12 entering the third stage 30; this permits greater flexibility of the plant regarding external variations, such as strong variations in the gas mixture stream 101 in input, with respect to both its flow rate and composition.

For example, the pressure of the permeate gas stream 12 in input to the compressor can be approximately 0.5 barg and the pressure of the stream in input to the third membrane-based gas separation stage 30 can vary between 2 and 5 barg depending on the required operational conditions.

According to a preferred but non-limiting embodiment, the initial gas mixture 101 to be separated is composed of a mixture of biogas originating for example from fermentation of animal sewage and can mainly comprise and with varying quantities, methane ($CH_4$), carbon dioxide ($CO_2$), ammonia ($NH_3$), hydrogen sulphide ($H_2S$), water ($H_2O$), oxygen and nitrogen. Other substances may be present in lesser and varying quantities. Said gas mixtures, before entering the separation stages, may be subjected to pre-treatment, for example in washing towers in accordance with embodiments already known to the skilled in the art and therefore not described in detail herein.

In this case, the plant 100 is advantageously configured so that the final retentate gas stream 21, further enriched in the first component A, is a gas stream enriched in methane or biomethane $CH_4$, and the final permeate gas stream 32, further enriched in the second component B, is a gas stream enriched in carbon dioxide $CO_2$.

In this case, a quantity of methane or biomethane is obtained having a purity suitable to be used as an energy source, introducing it for example into a methane gas distribution network, so avoiding its release into the free atmosphere and at the same time preventing its negative greenhouse effect. The resulting carbon dioxide can be released into the air or used in the food industry or other applications.

Practically, it has been established how the plant 100 according to the present invention reaches its intended object. In fact, by combining a second stage 20 with membranes having a selectivity lower than 15 with a first stage 10 with membranes having a selectivity lower than 30, it is possible to obtain optimal performance both in terms of purity of the first component A, in particular methane and biomethane, and in terms of production costs, in particular of the membranes whose number and cost are optimized, and overall energy consumption.

These results are further optimized by the internal recirculation ratio lower than 60%.

Furthermore, by utilizing one or more of the previously described controls, for example on the first compressor 40, and/or on the valve 35, and/or on the second compressor 70, the ratio between the quality, quantity and desired product value and the implementation, running and maintenance costs of the plants required for its production, is further optimized.

Naturally, without prejudice to the scope of the invention, many variations and implementation details thereof may be applied to the above described exemplary and non-limiting embodiments, without departing from the scope of protection of the invention as defined in the accompanying claims. For example, the control unit 55 can also act on the first valve 15 and/or on the second valve 25; such control unit 55 can be constituted by or comprise any device whatsoever based on a suitable processor, for example a processor of the type available on the market, suitably programmed and provided with sufficient circuits and components necessary to carry out the innovative functions designed for the plant 100 according to the present invention. For example, the control unit 55 can comprise a memory or data storage unit, a signal/data transceiver module, etc.

**Claims**

1. A plant (100) for separating a gas mixture containing a plurality of gaseous components, **characterized in that** it comprises at least:

- a first membranes-based gas separation stage (10) that is configured to receive in input a stream of gas mixture (102) and separate it into a first retentate gas stream (11), initially enriched in a first component (A) of said plurality of components, and a first permeate gas stream (12), initially enriched in a second component (B) of said plurality of components, said first membranes-based gas separation stage (10) comprising one or more first membrane modules having a total selectivity of said second component (B) with respect to said first component (A) of less than 30;

- a second membranes-based gas separation stage (20) that is configured to receive in input said first retentate gas stream (11) and separate it into a final retentate gas stream (21), further enriched in said first component (A), and a second permeate gas stream (22) recirculated upstream of said first membranes-based gas separation stage (10), said second membranes-based gas separation stage (20) comprising one or more second membrane modules having a total selectivity of said second component (B) with respect to said first component (A) of less than 15;

- a third membranes-based gas separation stage (30), which is configured to receive in input said first permeate gas stream (12) and to separate it into a final permeate gas stream (32) further enriched in said second component (B) and a further retentate gas stream (31) recirculated upstream of said first membranes-based gas separation stage (10);

and wherein the recirculation ratio between the total volumetric flow rate of gas mixture recirculated upstream of said first membranes-based gas separation stage (10) by means of said second permeate gas stream (22) and further retentate gas stream (31) and the volumetric flow rate of the gas mixture stream to be separated at the inlet of the plant (100) is less than 60%.

2. A plant (100) according to claim 1, further comprising at least one first compressor (40) which is arranged upstream of said first membranes-based gas separation stage (10) and is configured to subject said gas mixture stream (102) to a compression step prior to being received in input by said first membranes-based gas separation stage (10), and a control unit (55) which is configured to control at least said first compressor (40) and regulate the pressure of said gas mixture stream (102) in input to said first membranes-based gas separation stage (10).

3. A plant (100) according to one or more of the preceding claims, further comprising a first device (50) disposed downstream of the second membranes-based gas separation stage (20) that is configured to detect at least one parameter indicative of the concentration of said first component (A) contained in said final retentate gas stream (21).

4. A plant (100) according to claim 3, wherein said control unit (55) is further configured to control at least said first compressor (40) and regulate the pressure of the gas mixture streams (102) entering said first membranes-based gas separation stage (10) based on one or more signals ($S_A$) received in input from said first device (50) indicative of the concentration of said first component (A) contained in said final retentate gas stream (21).

5. A plant (100) according to one or more of the preceding claims, further comprising a second device (60) disposed downstream of said third membranes-based gas separation stage (30) that is configured to detect at least one parameter indicative of the concentration of said first component (A) contained in said final permeate gas stream (32).

6. A plant (100) according to one or more of the preceding claims, further comprising at least one control valve (35) disposed downstream of said third membranes-based gas separation stage (30) along a recirculation line of said retentate gas stream (31) recirculated upstream of said first membranes-based gas separation stage (10), and wherein said control unit (55) is configured to control said regulating valve (35) and regulate the pressure of said first permeate gas stream (12) entering said third stage of membranes-based gas separation (30) based on one or more signals ($S_B$) received in input from said second device (60) indicative of the concentration of said first component (A) contained in said final permeate gas stream (32).

7. A plant (100) according to one or more of the preceding claims, further comprising a second compressor (70) which is disposed between said first membranes-based gas separation stage (10) and said third membranes-based gas separation stage (30) and is configured to subject said first permeate gas stream (12) to a compression step before being received as an inlet by said third membranes-based gas separation stage (30), and wherein said control unit (55) is configured to control said second compressor (70) and regulate the pressure of said first permeate gas stream (12) exiting the first membranes-based gas separation stage (10).

8. A plant (100) according to claim 7, wherein the control unit (55) is configured to regulate the compression ratio between the pressure of the first permeate gas stream (12) exiting the first membranes-based gas separation stage (10) and the pressure of the first permeate gas stream (12) entering the third membranes-based gas separation stage (30) in a range comprised between 1 and 5.

9. A plant (100) according to one or more of the preceding claims, configured to extract from said mixture of gas methane as the first component (A) and carbon dioxide as the second component (B).

FIG.1

Europäisches
Patentamt

European
Patent Office

Office européen
des brevets

# EUROPEAN SEARCH REPORT

Application Number

EP 24 18 7447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/336046 A1 (UNGERANK MARKUS [AT] ET AL) 26 November 2015 (2015-11-26) | 1-6,9 | INV. B01D53/22 |
| Y | * paragraphs [0087] - [0089]; claims 1-3,12,14; figure 1 * | 7,8 | ADD. B01D53/30 |
| | ----- | | |
| X | US 2019/224617 A1 (MITARITEN MICHAEL J [US]) 25 July 2019 (2019-07-25) | 1,2,7,9 | |
| Y | * paragraphs [0078], [0091], [0104]; figure 1; table 1 * | 7,8 | |
| | ----- | | |
| A | US 2021/170329 A1 (CAPRA FEDERICO [IT] ET AL) 10 June 2021 (2021-06-10) * figure 1 * | 1-9 | |
| | ----- | | |

TECHNICAL FIELDS
SEARCHED (IPC)

B01D

The present search report has been drawn up for all claims

| Place of search | Date of completion of the search | Examiner |
|---|---|---|
| Munich | 27 November 2024 | Bergt, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7447

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 2015336046 A1 | 26-11-2015 | AU 2013347150 A1 | 07-05-2015 |
| | | BR 112015010492 A2 | 11-07-2017 |
| | | CA 2891492 A1 | 22-05-2014 |
| | | CN 104797322 A | 22-07-2015 |
| | | DK 2919888 T3 | 14-10-2019 |
| | | EA 201500531 A1 | 29-01-2016 |
| | | EP 2919888 A1 | 23-09-2015 |
| | | ES 2746099 T3 | 04-03-2020 |
| | | HR P20191705 T1 | 13-12-2019 |
| | | HU E045214 T2 | 30-12-2019 |
| | | JP 6400017 B2 | 03-10-2018 |
| | | JP 2016505354 A | 25-02-2016 |
| | | KR 20150083855 A | 20-07-2015 |
| | | LT 2919888 T | 10-10-2019 |
| | | MY 185177 A | 30-04-2021 |
| | | PH 12015501063 A1 | 27-07-2015 |
| | | PL 2919888 T3 | 31-12-2019 |
| | | PT 2919888 T | 17-09-2019 |
| | | SG 11201503826R A | 29-06-2015 |
| | | SI 2919888 T1 | 30-09-2019 |
| | | US 2015336046 A1 | 26-11-2015 |
| | | WO 2014075850 A1 | 22-05-2014 |
| | | ZA 201503318 B | 25-05-2016 |
| US 2019224617 A1 | 25-07-2019 | US 2019224617 A1 | 25-07-2019 |
| | | US 2020206680 A1 | 02-07-2020 |
| US 2021170329 A1 | 10-06-2021 | EP 3831462 A1 | 09-06-2021 |
| | | IT 201900022983 A1 | 04-06-2021 |
| | | US 2021170329 A1 | 10-06-2021 |

EPO FORM P0459

For more details about this annex : see Official Journal of the European Patent Office, No. 12/82